# EUROPEAN PATENT SPECIFICATION

(11) **EP 3 576 516 B1**
(45) Date of publication and mention of the grant of the patent: **18.08.2021**
(21) Application number: 18704198.3
(22) Date of filing: 03.02.2018
(51) Int. Cl.: A01D 43/08

(54) **FORAGE HARVESTER COMPRISING A BLOWER DRUM WITH ENHANCED AXIAL FLOW**
FELDHÄCKSLER MIT AUSWURFBESCHLEUNIGER MIT ERHÖHTEM AXIALFLUSS
RÉCOLTEUSE-HACHEUSE COMPRENANT UN ACCÉLÉRATEUR D'ÉJECTION AYANT UN ÉCOULEMENT AXIAL AMÉLIORÉ

(30) Priority: 03.02.2017 BE 201705074
(43) Date of publication of application: 11.12.2019
(73) Proprietor: CNH Industrial Belgium NV, 8210 Zedelgem (BE)
(72) Inventor: WILLEM, Bram, 8650 Woumen Houthulst (BE)
(74) Representative: CNH Industrial IP Department
(86) International application number: PCT/EP2018/052723
(87) International publication number: WO 2018/141943

(56) References cited:
- EP-A1- 1 275 291
- EP-A1- 2 853 147
- GB-A- 1 594 744
- US-A- 4 592 514

## Description

### Field of the Invention

The present invention is related to forage harvesters used in agriculture for cutting crops and comprising a blower system for evacuating the crops from the harvester.

### State of the art

Self-propelled forage harvesters comprise a header which cuts crops from the field and feeds them towards a cutting drum, where the crops are chopped into smaller pieces. These chopped materials are evacuated from the harvester by a blower. Most harvester types comprise a cylinder-shaped blower drum mounted transversally with respect to the product stream, and provided with paddles or plates on the outer surface of the drum. The plates or paddles of the rotating drum propel the crop towards an outlet duct. Depending on the type and condition of the crop, the acceleration that is imparted on the crop material may be insufficient for effectively evacuating the crop from the harvester.

Systems are known for enhancing the momentum of the crop material as it is ejected from the blower. One solution that has been documented, for example in EP-A-1275291, is the addition of radial ventilator blades on the side walls of the blower drum to create lateral air streams which aid the flow of the crop material towards the outlet duct. US4592514 A relates to a field chopper which employs adjustable radial vanes on endplates of a cutter drum to increase radial flow in a drum housing and thereby increase airflow in an outlet. Another approach is the use of a blower drum with an open structure and mounted in a housing with laterally disposed inlet openings. The rotation of the drum generates a flow of air between these inlet openings and the outlet duct, said air flow enhancing the momentum of the crops being ejected through the duct. These solutions have the disadvantage however that the auxiliary air flow is concentrated mostly in the lateral areas of the product stream, so that the propulsion of material does not take place in a uniform manner. In addition, a more pronounced acceleration of material in the lateral areas causes friction losses in the outlet duct.

### Summary of the invention

The invention is related to a forage harvester as described in the appended claims. The invention is in particular related to a forage harvester configured for chopping harvested crops and producing a stream of chopped crop material, the harvester comprising a blower drum mounted in a blower housing and rotatable about a rotation axis oriented transversally with respect to the stream of crop material, for propelling the stream of crop material into an outlet duct of the harvester, wherein the blower drum has an open structure which allows a flow of air in the axial direction of the drum, and wherein the blower drum is mounted between two sidewalls of the blower housing, at least one of the sidewalls comprising one or more air inlet openings, characterised in that the harvester comprises at least one set of axial flow turbine blades, mounted between the blower drum and one or both of the sidewalls of the blower housing, the blades being rotatable about the blower drum's rotation axis.

The blades are configured to direct a flow of air in the axial direction of the blower drum, i.e. from the one or more inlet openings in the sidewalls of the housing towards a central area of the drum. Compared to the existing systems described above, this means that the air flow is enhanced as well as being better guided towards the centre of the drum before being ejected through the outlet duct, so that the flow of air that is driving the crop material is more distributed along the width of the blower drum and outlet duct.

### Brief description of the figures

Figure 1 shows a side view of a forage harvester, with the main components indicated on the drawing.
Figure 2 shows an image of a blower drum provided with turbine blades, in accordance with an embodiment of the invention.
Figures 3 shows the blower drum of Figure 2, mounted in a blower housing.

### Detailed description of preferred embodiments of the invention

Preferred embodiments will now be described with reference to the drawings. The detailed description is not limiting the scope of the invention, which is defined only by the appended claims.

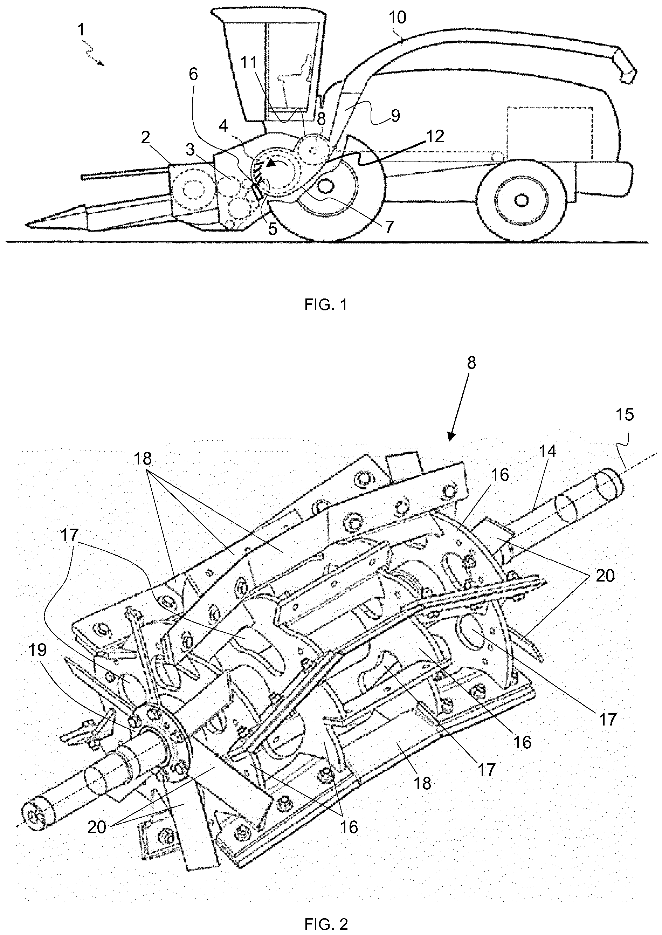

Figure 1 shows a schematic side view of a self-propelled forage harvester 1 including its main components. As the harvester advances through a field, crops are gathered by a header 2 and transported to a central area of the header where the crops enter a set of feed rolls 3. The rolls guide the crops in the form of a mat with a given thickness towards the cutting drum 4, which rotates in the direction indicated by the arrow. Knives 5 are mounted on the drum (only four are shown, the knives are distributed along the full circumference of the drum), so that the knives pass by a stationary shear bar 6 as the drum rotates, thereby chopping the crops into small pieces which are further transported between the cutting drum 4 and a concave 7, to thereby produce a stream of chopped crop material that advances towards a blower drum 8. The blower drum 8 propels the material into a vertically disposed outlet duct 9, also known as the tower, from where the crop is finally evacuated from the harvester through a pivotable spout 10, for example into a container that advances adjacent to the harvester 1 and at the same speed as the harvester. The blower drum 8 is mounted inside a blower housing which forms a cylindrical enclosure 11 at the upper portion and a slanted surface 12 at the bottom, said slanted surface forming a continuous path for the crop material together with the concave 7 and the tower 9. The blower housing has lateral side walls, essentially parallel to the plane of the drawing, on either side of the blower drum 8.

In a harvester according to the invention, the blower drum 8 is a drum with an open structure as described above. In addition, the harvester is provided with at least one and preferably two sets of turbine fans configured to enhance the flow of air in the axial direction inside the open drum structure. Figure 2 illustrates a blower drum 8 according to an embodiment of the present invention. The drum is mounted on an axle 14 that is rotatable about rotation axis 15. The body of the drum is formed by four parallel discs 16 provided with openings 17 to permit the flow of air in the axial direction of the drum. Paddles 18 are mounted transversally to the discs 16 for propelling the crop material towards the tower 9. On each lateral end, the drum comprises a flange 19 with a number of turbine blades 20 extending radially outward from the flange. The blades are tilted with respect to a plane perpendicular to the rotation axis 15, so as to create an axial air flow when the blades 20 rotate together with the drum 8. In the particular embodiment of Figure 2, the blades 20 and the flange 19 are uniform with the drum 8, i.e. the drum 8 and the blades 20 rotate as a single body.

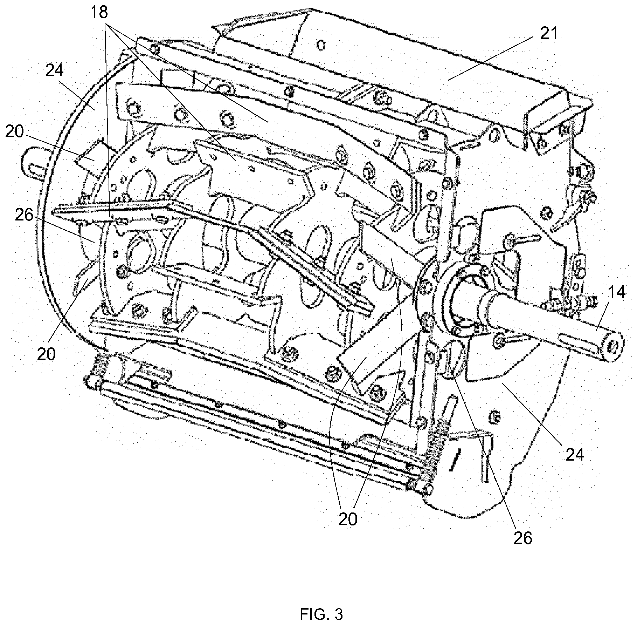

Figure 3 shows the drum 8 of Figure 2, together with the side walls 24 of the housing and without the cylindrical upper enclosure 11 in order to visualize the drum 8 and the turbine blades 20. The front portion of the side wall 24 on the right hand side of the drawing is also removed, so that the blades 20 on this right hand side are visible. The drum is mounted on the axle 14 that is driven by the power source of the harvester. The upper section 21 of the blower housing is coupled to the outlet tower (not shown in this drawing) . The side walls 24 of the housing have openings 26 for allowing the axial inflow of air into the interior of the drum. The rotating turbine blades 20 force the incoming air to flow in the axial direction, i.e. from the sides of the drum towards the centre. Compared to the open drum systems without turbine blades, more air is flowing into the open drum structure because of the turbine blades 20, thereby generating higher air speeds in the outlet tower 9, and an increased momentum of the evacuated crop material. The air flow is furthermore effective in guiding more of the crop material towards a central area of the drum before being ejected into the outlet tower 9, compared to existing systems. In this way, crop material is distributed across the width of the outlet tower, and less material is moving along the sidewalls of the tower, leading to a reduction of friction losses.

A number of constructional details shown in the drawings are described hereafter, but are not limiting the scope of the invention. As seen in Figures 2 and 3, the paddles 18 may extend laterally outward between the turbine blades 20. This allows the paddles to extend as much as possible towards the side walls 24 so that material across the full width of the blower housing is effectively swept up by the paddles 18. It is however possible also to mount the turbine blades 20 fully outward of the paddles 18, which would leave lateral areas of the blower housing where the crop material is not swept by the paddles. The increased axial air flow caused by the turbine blades 20 will in any case minimize losses of material in these lateral areas. In this latter embodiment, i.e. when the paddles 18 do not extend between the turbine blades 20, it is possible to make the turbine blades 20 rotate about the axis 15 independently from the blower drum 8. Such an embodiment is technically more complex as it requires a separate drive mechanism for the turbine blades, but it has the advantage that the axial air flow can be controlled independently from the blower speed. In the latter embodiment, the blades are not uniform with the blower drum 8, but the flange 19 and the blades 20 together form a separate rotatable body.

According to an embodiment of the invention, the turbine blades 20 have the additional function of cleaning the inlet openings 26 in the side walls 24 of the blower housing. This may be done by mounting the blades 20 so that their outer edge is as close as possible to the side walls 24, so that any crop material that obstructs the inlet openings 26 is scraped away by the edges of the rotating blades 20. According to another embodiment, the blades 20 are not as close to the side walls 24 as in the previously described embodiment, but one or more blades 20 is provided with scrapers or brushes which do extend close to the side walls 24, and thereby have the same cleaning effect.

According to an embodiment, the turbine blades 20 are pivotable and positionable at a plurality of angular positions about their longitudinal axis, so as to change the inclination of the blades with respect to a vertical plane perpendicular to the drum's rotation axis 15. This feature also allows to control the axial air flow independently from the rotation of the blower drum 8. This feature can be combined with the embodiment wherein the blades 20 are uniform with the drum 8 as well as with the embodiment wherein the blades 20 are capable of rotating about axis 15 independently from the drum 8.

Although it is clearly advantageous to provide turbine blades 20 on both sides of the blower drum 8, as shown in the drawings, a blower drum provided with blades 20 on one side only is not excluded from the scope of the invention.

The invention is preferably related to a self-propelled forage harvester 1 as illustrated in Figure 1, but the invention is also applicable to a stationary forage harvester.

## Claims

1. A forage harvester (1) configured for chopping harvested crops and producing a stream of chopped crop material, the harvester comprising a blower drum (8) mounted in a blower housing (11,12,24) and rotatable about a rotation axis (15) oriented transversally with respect to the stream of crop material, for propelling the stream of crop material into an outlet duct (9) of the harvester, wherein the blower drum (8) has an open structure which allows a flow of air in the axial direction of the drum, and wherein the blower drum is mounted between two sidewalls (24) of the blower housing, at least one of the sidewalls (24) comprising one or more air inlet openings (26), **characterised in that** the harvester (1) comprises at least one set of axial flow turbine blades (20), mounted between the blower drum (8) and one or both of the sidewalls (24) of the blower housing, the blades being rotatable about the blower drum's rotation axis (15).

2. The harvester according to claim 1, wherein the at least one set of turbine blades (20) is uniform with the blower drum (8), so that the blades (20) rotate together with the drum (8) as a single body.

3. The harvester according to claim 2, wherein the blower drum (8) comprises paddles (18) for propelling the crop material towards the outlet duct (9), and wherein said paddles (18) extend laterally outward between the turbine blades (20).

4. The harvester according to claim 1, wherein the at least one set of turbine blades (20) is configured to rotate independently from the blower drum (8).

5. The harvester according to any one of the preceding claims, wherein the turbine blades (20) of at least one set of blades are mounted in close proximity to the one or more inlet openings (26) of one of the side walls (24) of the blower housing, so as to be able to remove crop material that obstructs the one or more inlet openings (26) in said side wall (24).

6. The harvester according to any one of claims 1 to 4, wherein one or more of the turbine blades (20) of at least one set of blades mounted between the blower drum (8) and one of the side walls (24) of the blower housing are provided with a scraper or brush configured to remove crop material that obstructs the one or more inlet openings (26) in said side wall (24).

7. The harvester according to any one of the preceding claims, wherein the turbine blades (20) of the at least one set of blades are positionable at a plurality of angular positions about their longitudinal axis, in order to change the inclination of the blades with respect to a plane perpendicular to the rotation axis (15) of the blower drum.

## Patentansprüche

1. Feldhäcksler (1), der zum Häckseln von geerntetem Erntegut und zum Erzeugen eines Stroms von gehäckseltem Erntegut ausgestaltet ist, wobei der Feldhäcksler eine Auswerfertrommel (8) aufweist, die in einem Auswerfergehäuse (11, 12, 24) montiert und drehbar um eine Drehachse (15) ist, die quer in Bezug auf den Erntegutstrom ausgerichtet ist, um den Erntegutstrom in einen Auswerferschacht (9) des Feldhäckslers zu treiben, wobei die Auswerfertrommel (8) eine offene Struktur aufweist, die einen Luftstrom in der axialen Richtung der Trommel ermöglicht, und wobei die Auswerfertrommel zwischen zwei Seitenwänden (24) des Auswerfergehäuses montiert ist, wobei mindestens eine der Seitenwände (24) eine oder mehrere Lufteinlassöffnungen (26) aufweist, **dadurch gekennzeichnet, dass** der Feldhäcksler (1) mindestens einen Satz von Axialströmungsturbinenschaufeln (20) aufweist, die zwischen der Auswerfertrommel (8) und einer oder beiden Seitenwänden (24) des Auswerfergehäuses montiert sind, wobei die Schaufeln um die Drehachse (15) der Auswerfertrommel drehbar sind.

2. Feldhäcksler nach Anspruch 1, wobei der mindestens eine Satz von Turbinenschaufeln (20) integral mit der Auswerfertrommel (8) ist, so dass sich die Schaufeln (20) zusammen mit der Trommel (8) als ein einzelner Körper drehen.

3. Feldhäcksler nach Anspruch 2, wobei die Auswerfertrommel (8) Schaufeln (18) zum Vorantreiben des Erntematerials in Richtung des Auswerferschachts (9) aufweist, und wobei sich die Schaufeln (18) seitlich nach außen zwischen die Turbinenschaufeln (20) erstrecken.

4. Feldhäcksler nach Anspruch 1, wobei der mindestens eine Satz von Turbinenschaufeln (20) dazu ausgestaltet ist, sich unabhängig von der Auswerfertrommel (8) zu drehen.

5. Feldhäcksler nach einem der vorhergehenden Ansprüche, wobei die Turbinenschaufeln (20) mindestens eines Schaufelsatzes in unmittelbarer Nähe der einen oder mehreren Einlassöffnungen (26) einer der Seitenwände (24) des Auswerfergehäuses angebracht sind, um Erntematerial entfernen zu können, das die eine oder mehreren Einlassöffnungen (26) in der Seitenwand (24) verstopft.

6. Feldhäcksler nach einem der Ansprüche 1 bis 4, wobei eine oder mehrere der Turbinenschaufeln (20) des mindestens einen Schaufelsatzes, der zwischen der Auswerfertrommel (8) und einer der Seitenwände (24) des Auswerfergehäuses angebracht ist, mit einem Schaber oder einer Bürste versehen sind, der/die dazu ausgestaltet ist, Erntematerial, das die eine oder mehrere Einlassöffnungen (26) in der Seitenwand (24) verstopft, zu entfernen.

7. Feldhäcksler nach einem der vorhergehenden Ansprüche, wobei die Turbinenschaufeln (20) des mindestens einen Schaufelsatzes in einer Mehrzahl von Winkelstellungen um ihre Längsachse positionierbar sind, um die Neigung der Schaufeln in Bezug auf eine Ebene senkrecht zur Drehachse (15) der Auswerfertrommel zu verändern.

## Revendications

1. Récolteuse-hacheuse (1) configurée pour hacher des matières récoltées et produire un flux de matières récoltées hachées, la récolteuse comprenant un tambour de ventilateur (8) monté dans un boîtier de ventilateur (11, 12, 24) et qui peut tourner autour d'un axe de rotation (15) orienté transversalement par rapport au flux de matières récoltées, pour propulser le flux de matières récoltées dans un conduit de sortie (9) de la récolteuse, dans laquelle le tambour de ventilateur (8) a une structure ouverte qui permet à un flux d'air d'entrer dans la direction axiale du tambour, et dans laquelle le tambour de ventilateur est monté entre deux parois latérales (24) du boîtier de ventilateur, au moins une des parois latérales (24) comprenant une ou plusieurs ouvertures d'entrée d'air (26), **caractérisée en ce que** la récolteuse (1) comprend au moins un ensemble d'aubes de turbine à flux axial (20), monté entre le tambour de ventilateur (8) et une ou deux parois latérales (24) du boîtier de ventilateur, les aubes pouvant tourner autour de l'axe de rotation du tambour de ventilateur (15).

2. Récolteuse selon la revendication 1, dans laquelle le au moins un ensemble d'aubes de turbine (20) est uniforme au tambour de ventilateur (8), de sorte que les aubes (20) tournent avec le tambour (8) comme un seul bloc.

3. Récolteuse selon la revendication 2, dans laquelle le tambour de ventilateur (8) comprend des pales (18) destinées à propulser des matières récoltées vers le conduit de sortie (9), et dans laquelle lesdites pales (18) s'étendent latéralement vers l'extérieur entre les aubes de turbine (20).

4. Récolteuse selon la revendication 1, dans laquelle le au moins un ensemble d'aubes de turbine (20) est configuré pour tourner indépendamment du tambour de ventilateur (8).

5. Récolteuse selon l'une quelconque des revendications précédentes, dans laquelle les aubes de turbine (20) d'au moins un ensemble d'aubes est monté à proximité d'une ou de plusieurs ouvertures d'entrée d'air (26) de l'une des parois latérales (24) du boîtier de ventilateur, de manière à pouvoir éliminer les matières récoltées qui bloquent une ou plusieurs ouvertures d'entrée d'air (26) dans ladite paroi latérale (24).

6. Récolteuse selon l'une quelconque des revendications précédentes 1 à 4, dans laquelle une ou plusieurs aubes de turbine (20) d'au moins un ensemble d'aubes monté entre le tambour de ventilateur (8) et une des parois latérales (24) du boîtier de ventilateur sont équipées d'un racleur ou d'une brosse configuré(e) pour éliminer les matières récoltées qui bloquent une ou plusieurs ouvertures d'entrée d'air (26) dans ladite paroi latérale (24).

7. Récolteuse selon l'une quelconque des revendications précédentes, dans laquelle les aubes de turbine (20) d'au moins un ensemble d'aubes peuvent être positionnées à plusieurs positions angulaires autour de leur axe longitudinal, afin de changer l'inclinaison des aubes par rapport à un plan perpendiculaire à l'axe de rotation (15) du tambour de ventilateur.
